Europäisches Patentamt

(19) European Patent Office

Office européen des brevets

(11) Publication number: 0 158 604
A2

# (12) EUROPEAN PATENT APPLICATION

(21) Application number: 85830044.5

(22) Date of filing: 26.02.85

(51) Int. Cl.⁴: E 05 D 5/08
E 05 D 3/06

(30) Priority: 29.02.84 IT 60784
05.03.84 IT 52284 U

(43) Date of publication of application:
16.10.85 Bulletin 85/42

(84) Designated Contracting States:
AT BE CH DE FR GB LI LU NL SE

(71) Applicant: Società "OMAS" - S.r.l.
Via La Forma
I-60020 Sirolo (An)(IT)

(72) Inventor: Grilli, Umberto
Via Don Minzoni, 5
Sirolo (AN)(IT)

(72) Inventor: Grilli, Marco
Via Don Minzoni, 5
Sirolo (AN)(IT)

(74) Representative: Baldi, Claudio
Viale della Vittoria 97
I-60035 Jesi (Ancona)(IT)

(54) Invisible hinge with simplified mechanism and flexible fixing shells.

(57) This invention concerns a disappearing hinge with a simplified mechanism and flexible anchorage shells.

The semplification of the mechanism consists in the elimination of the spacers normally employed on the pins hinging together the various kinematic components.

Externally the anchorage shells are made up of longitudinal crests consisting of rigid saw-teeth, which spring out of shape when flattened, thanks to an internal cavity running along the shell walls right underneath the longitudinal crests.

EP 0 158 604 A2

- 1 -

Disappearing hinge with a simplified mechanism and flexible anchorage shells.

This patent application concerns a disappearing hinge of new design, economic on the one hand and a reliable and efficient anchorage to its point of installation, on the other.

The disappearing hinge has already been mounted in different sectors for several years, especially in furniture, where both for aesthetic reasons and practicability when mounted, it has continually been put to wider use.

The disappearing hinge in question is chiefly made up of two cylindrical shells, which in turn house two small frames connected by a system of small levers, which permit the two shells to move from a perfectly aligned and co-axial position (closed hinge) to a perfect side by side parallel position (open hinge), after a rotation of 180° of the shell anchored to the mobile panel in respect to the shell anchored to the fixed panel.

Up to now various kinds of hinges made from different materials have been produced and commercialized, using the same mechanism, but different with regard to shape and ways of fixing the anchorage shells, which are to be fitted and held in place on a particular point of a piece of furniture.

Externally the anchorage shells present a corrugated surface, more or less accentuated, and arranged in different ways according to preference, but nevertheless hardly ever suitable to guarantee on

**0158604**

its own, a stable and safe anchorage to the point of installation; in fact in all types of shells for disappearing hinges in production at the moment, suitable holes are provided for the securing screws, which alone can safely guarantee an efficient blocking of the hinge.

The aim of this invention is to find a functional and economical solution to the problem of anchorage in disappearing hinges, by giving the shells a flexible structure, guaranteeing stoppage by pure forcing into the place of installation, thus eliminating the need to resort to specific and auxiliary means of fixing, which, needless to say, weigh heavily on the cost of the hinge and its installation.

In the intent of further reducing costs of production of the disappearing hinge this invention also proposes, in respect to current techniques, the elimination of the spacers presently in use for hinges, for the purpose of reducing working time and thus assembly costs of the various kinematic components.

The hinge is chiefly made up of small flat levers, facing each other and straddled, hinged together at an intermediate point; each small lever is fixed at one end to a point on one of the two supporting frames to be installed in the abovementioned anchorage shells, whilst at the other end to a mobile pin, sliding within the other supporting frame.

The elimination of the spacers normally placed between two small levers or between one lever and a part of the mechanism's supporting frames, is possible, on the one hand, by obtaining the internal washer from the two levers by means of a semiblanking made directly onto the levers during pressing, on the other by compressing and bending a part of the supporting frames.

Getting back to the problem of anchorage of the hinge, this invention proposes a particular shell design, characterized by two longitudinal crests diametrically opposed, made up of a series of saw-teeth springing out of shape when flattened thanks to an internal cavity, which lies lengthwise passing through the walls of the shells right underneath each of the above-mentioned crests.

Such crests flatten while forcing the shell into the place of installation, where they tend to open, exerting a pressure on the side walls, which at times, causes the saw-teeth to penetrate into the material, especially if soft.

For a clearer explanation, we shall proceed with references to the drawings attached for illustrative and not restrictive purposes, where:

- fig. 1 represents the anchorage shell half in front and half in sectional view, according to the invention;

- fig. 2 is a front view of the anchorage shell according to the invention;

- fig. 3 shows the front view of the anchorage shell forced and flattened within the point of installation;

- fig. 4 is the cross-section of fig. 3 with section A-A leaving the shell in view;

- fig. 5 shows the front view of the anchorage shell forced and opened in the point of installation;

- fig. 6 is the cross section of fig. 5 with section B-B, leaving the shell in view;

- fig. 7 is a view of the mechanism according to the invention, where for clarity, only one of the two supporting frames of the mechanism has been represented;

- fig. 8 is the cross-section of fig. 7 with section C-C;

- fig. 9 is the cross-section of fig. 7 with section D-D.

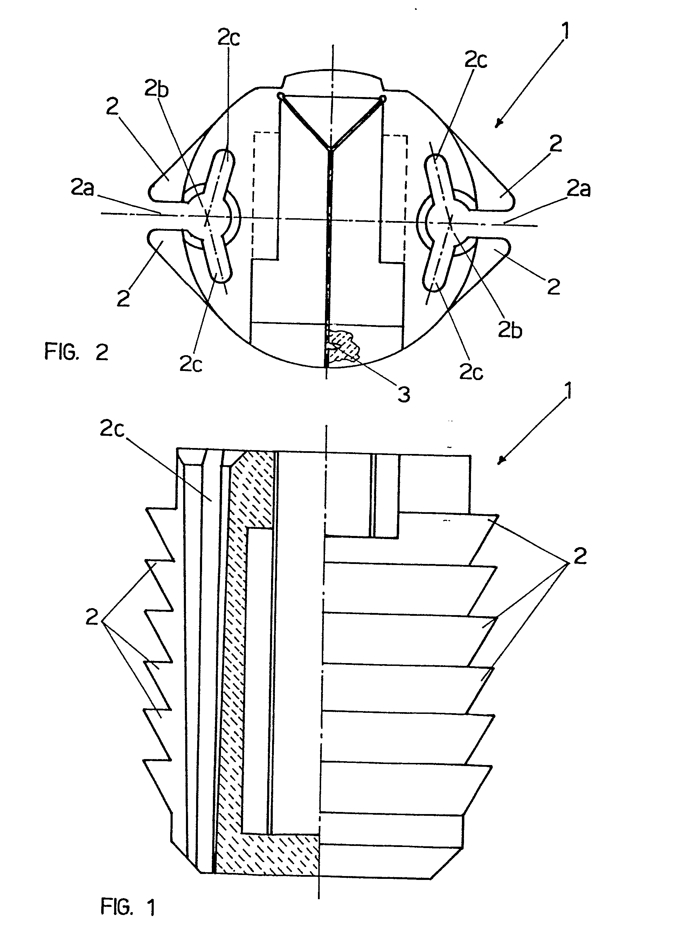

With reference to figures 1 and 2, the anchorage shell (1) is almost cylindrical in shape; the internal cavity can hold one of the two supporting frames of the mechanism, both of which are box-shaped.

- 4 -

0158604

The shell (1) is characterized by the two external longitudinal crests (2), diametrically opposed, made up of a series of rigid saw-teeth, tilting in such a way as to render insertion into the installation point easier and extraction more difficult.

Each longitudinal crest (2) is cut lengthwise by a centre slit (2a) leading to an internal passing cavity (2b) made from the thickness of the shell (1) which presents transversal slits laterally (2c), running along the full length of the passing cavity (2a).

In the form preferred, represented in the attached drawings, each shell (1) is moulded in plastic, on an open mould, that is with two semi- shells semi-cylindrical and non continuous, which are turned and secured one against the other by means of clasping buttons (3).

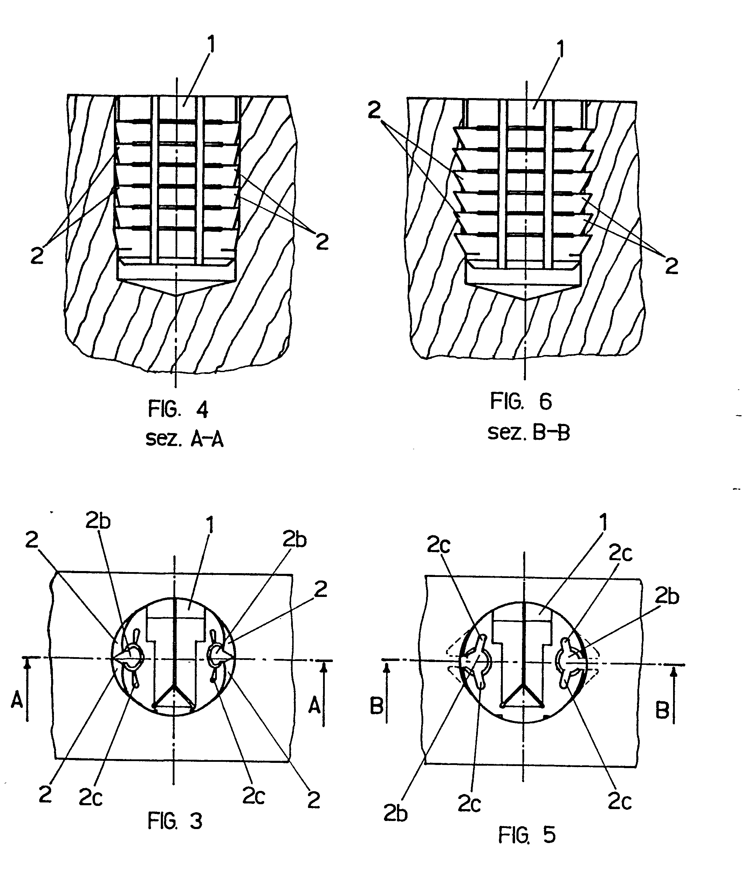

As shown in figures 3, 4, 5 and 6, the internal cavity (2a) bearing the transversal slits (2c) allows a considerable flattening of the longitudinal crests when the shell (1) is forced into its installation point. Then they tend to open, penetrating the rigid blades into the walls of the installation point, resulting in an efficient and long-lasting anchorage.

Let us now examine the variants introduced in the mechanism of the hinge.

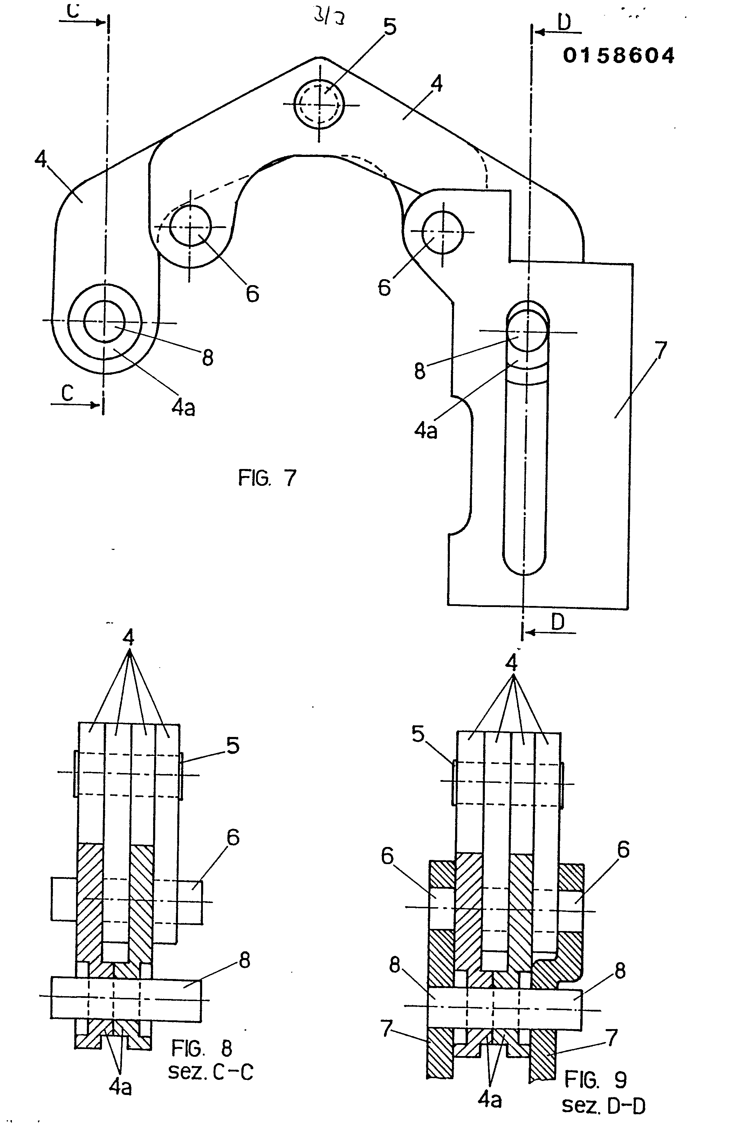

With reference to figures 7, 8 and 9, the mechanism in question is conventionally made up of the four small identical flat levers (4) placed facing each other and straddled, hinged together at an intermediate point by a central pin (5) which also keeps them linked together.

Each lever (4) is perforated at the ends, as they have to be hinged at one end to a pin fixed on one of the two supporting frames (7), at the other, to a pin (8) sliding within the other frame (7).

In correspondence with the pin (8), an empty space occurs between the two levers (4), equal to the thickness of the lever (4) placed between the first two. In this area a spacer as thick as the levers (4) is normally used.

This invention proposes the elimination of this spacer and its replacement by carrying out two semi-blankings on the two levers, each equal in depth to half the thickness of the levers (4) as shown in the attached drawings.

In correspondence to the pin (8), it has been necessary up to now to make use of a further spacer on one surface only, found between one lever (4) and a part of the small supporting frame (7).

This second spacer has also been eliminated, thanks to the present invention, which proposes, by combined compressure and bending stress, the creation of a step along a wall of the supporting frame so that two consecutive stretches are obtained in the wall, straddled and parallel.

In doing this, production costs for the mechanism of a disappearing hinge, in respect to current technology, are not only reduced by eliminating (4) spacers, but mainly by the simplicity and rapidity in the assembly of the various kinematic components.

- 1 -

Claims

1) Disappearing hinge, simplified in its mechanism, with flexible anchorage shells, characterized by the fact that each anchorage shell (1), with an almost cylindrical shape, hollow inside, to house one of the two small box-shaped supporting frames of the hinge mechanism, presents esternally two longitudinal crests (2), diametrically opposed, made up of a series of rigid saw-teeth, which can be flexibly compressed, despite their rigidity due to the fact that each longitudinal crest (2) is cut lengthwise by a central slit (2a) leading into a passing internal cavity (2b) cut from the thickness of the shell (1) and characterized by transversal slits laterally (2c) running the whole length of the passing cavity (2a).

2) Disappearing hinge, with simplified mechanism and flexible anchorage shells, making use of a conventional mechanism consisting of four identical flat levers (4), facing each other and straddled, hinged together at an intermediate point, each small lever (4) being hinged at one end to a pin (6) fixed on one of the two small box shaped supporting frames (7), and at the other, to a pin (8) sliding within the other frame (7), characterized by the fact that the spacer placed between two levers (4), in correspondence with the pin (8) is obtained carrying out two semi-blankings (4a) on the two levers, each of half the thickness of the levers (4) themselves.

3) Disappearing hinge, with semplified mechanism and flexible anchorage shells, using a conventional mechanism consisting of four flat identical levers (4) placed side by side opposite each other

- 2 -

**0158604**

and straggled, hinged together at an intermediate point, each lever being hinged, at one end, to a pin (6) fixed on one of the two small supporting boxshaped frames (7) and, at the other, to a pin (8) sliding within the second small supporting frame (7), <u>characterized by the fact that</u> in correspondence to the pin (8) one of the two parts of the small box-shaped supporting frame (7) presents a step (7a), so as to obtain (2) consecutive stretches, straddled and parallel.

0158604

FIG. 2

FIG. 1

0158604

2/3

FIG. 4
sez. A-A

FIG. 6
sez. B-B

FIG. 3

FIG. 5

TAV. II-3

3/3

0158604

FIG. 7

FIG. 8
sez. C-C

FIG. 9
sez. D-D

TAV. III-3